# EUROPÄISCHE PATENTSCHRIFT

(11) **EP 0 930 453 B1**
(45) Veröffentlichungstag und Bekanntmachung des Hinweises auf die Patenterteilung: **29.09.2004**
(21) Anmeldenummer: 98123853.8
(22) Anmeldetag: 16.12.1998
(51) Int. Cl.: F16J 15/32

(54) **Vorrichtung zum Abdichten eines Zylinders gegenüber einer Kolbenstange.**
Sealing arrangement between a cylinder and a piston shaft
Dispositif d'étanchéité entre un cylindre et un arbre de piston

(30) Priorität: 13.01.1998 DE 19800827
(43) Veröffentlichungstag der Anmeldung: 21.07.1999
(73) Patentinhaber: ThyssenKrupp Bilstein GmbH, 58256 Ennepetal (DE); DaimlerChrysler AG, 70567 Stuttgart (DE)
(72) Erfinder: Huang, Zhen, Dr., 42389 Wuppertal (DE); Herrmann, Claus Dieter, 71126 Gäufelen (DE)

(56) Entgegenhaltungen:
- DE-A- 2 206 771
- FR-A- 2 617 939
- US-A- 4 917 390
- US-A- 5 104 131
- US-A- 5 149 107

## Beschreibung

Die Erfindung betrifft eine Vorrichtung nach dem Oberbegriff des Anspruchs 1. Derartige Vorrichtungen werden vorzugsweise zum Abdichten des herausgeführten Endes einer oszillierenden Kolbenstange bei hydraulischen Stoßdämpfern eingesetzt, wobei eine gute Abdichtung des unter Hochdruck stehenden Hydraulikmediums bei geringer Reibung zwischen Kolbenstange und Dichtung erzielt werden soll.

Die DE-OS 2 206 771 zeigt eine gattungsgemäße Vorrichtung. Nachteilig bei dieser Vorrichtung muß eine äußerst formgenaue Ausbildung der Dichtungsaufnahme vorgenommen werden, da diese Aufnahme im Dichtungsquerschnitt exakt angepaßt sein muß. Weiterhin nachteilig wird eine ausreichende Dichtigkeit bei tiefen Temperaturen nur mit einer erhöhten Vorspannung erreicht, was zu unnötigen Reibungsverlusten führt.

Der Erfindung liegt die Aufgabe zugrunde, den Aufbau einer gattungsgemäßen Vorrichtung einfacher zu gestalten und bei niedrigen Reibwerten eine gute Dichtigkeit auch bei tiefen Temperaturen zu erzielen.

Diese Aufgabe wird erfindungsgemäß durch die Merkmale des Anspruchs 1 gelöst. Vorteilhafte Aus- und Weiterbildungen sind in den Ansprüchen 2 bis 5 beschrieben.

Die mit der Erfindung erzielten Vorteile bestehen insbesondere darin, daß eine einfache, weil im Querschnitt rechteckige Form der Dichtungskammer vorgesehen werden kann. Darüber hinaus kann eine einfache Beeinflussung der Dichtung durch den Austausch von Rundschnurringen unterschiedlicher Werkstoffqualität oder unterschiedlicher Größe erzielt werden. Besonders vorteilhaft wird die radiale Anpressung des Dichtelements an die Kolbenstange, insbesondere bei Kälte, hydraulisch unterstützt, auch wenn die Rundschnurringe bei Temperaturen um minus 40° Celsius keine große Elastizität mehr besitzen.

Ein Ausführungsbeispiel der Erfindung ist in der Zeichnung dargestellt und wird im folgenden näher beschrieben. Es zeigen
- Fig. 1: einen Schnitt durch den Austrittsbereich der Kolbenstange aus dem Stoßdämpferzylinder und
- Fig. 2: eine vergrößerte Darstellung der in Fig. 1 gezeigten Dichtung.

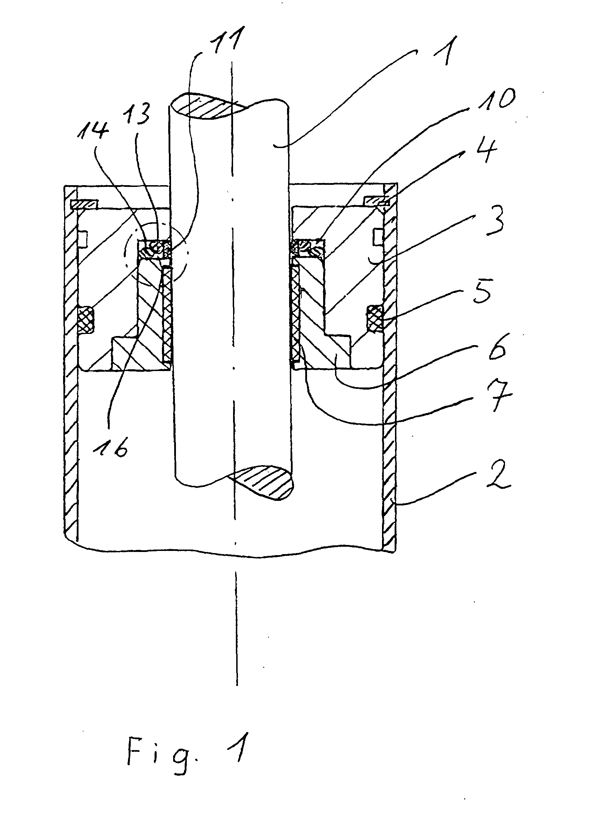

Im Ausführungsbeispiel wird die Vorrichtung zum Abdichten einer sich oszillierend bewegenden Kolbenstange 1 beim Eintritt in das offene Ende eines Zylinders 2 eines hydraulischen Schwingungsdämpfers beschrieben. Fig. 1 zeigt einen vergrößerten Ausschnitt dieses Bereiches.

Am offenen Ende des Zylinders 2 ist ein Abschlußring 3 über einen Sprengring 4 befestigt. Eine Dichtung 5 liegt zwischen dem Abschlußring 3 und dem Zylinder 2. Ein Aufnahmering 6 ist in eine Aufnahmebohrung des Abschlußrings 3 eingebracht und über ein Gewinde mit diesem verschraubt. Der Aufnahmering 6 trägt in seiner inneren zentralen Bohrung eine Gleitbuchse 7 zur radialen Lagerung der Kolbenstange 1.

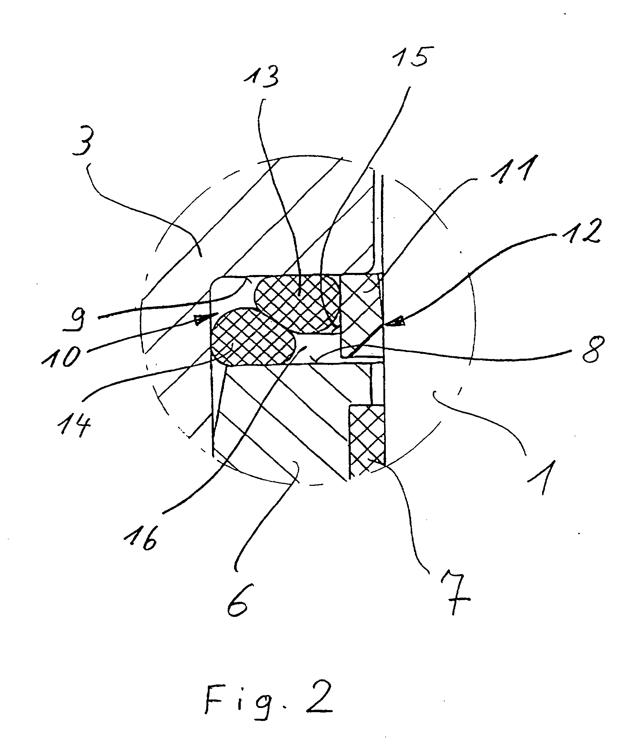

Zwischen der stirnseitigen Ringfläche 8 des Aufnahmerings 6 und dem Boden 9 der Sackbohrung im Abschlußring 3 ist ein Abstand vorhanden, der mit den umliegenden Flächen eine Dichtungskammer 10 bildet. Diese Dichtungskammer 10 mit ihren Einbauten ist in Fig. 2 vergrößert dargestellt. Im zentrumsnahen Bereich der Dichtungskammer 10, am Außenumfang der Kolbenstange 1, ist ein Dichtelement 11 angeordnet. Der Innenmantel dieses Dichtelements 11 ist in zwei Richtungen leicht bzw. stark konisch ausgebildet, so daß das Dichtelement 11 nur mit einer umlaufenden Dichtkante 12 am Außenumfang der Kolbenstange 1 aufliegt. Derartig ausgebildete Dichtelemente 11 haben sich zum Abdichten von oszillierenden Kolbenstangen 1 bei hydraulischen Stoßdämpfern bewährt. Zum Verspannen des Dichtelements 11 gegen die Kolbenstange 1 werden zwei Rundschnurringe 13, 14 verwendet. Diese Rundschnurringe 13, 14 weisen zusammen eine Querschnittsfläche auf, die kleiner ist als die Querschnittsfläche der Dichtungskammer 10. Im Ausführungsbeispiel haben die Rundschnurringe 13, 14 im unverspannten Zustand einen kreisförmigen Querschnitt. Sie liegen derartig in der Dichtungskammer 10, daß ihr Querschnitt diagonal aneinander und an den Anlageflächen der Dichtungskammer 10 sowie der Rückenfläche 15 des Dichtelements 11 anliegt.

Der Querschnitt der Rundschnurringe 13, 14 ist so bemessen, daß die Rundschnurringe beim Anliegen aneinander und an den Anlageflächen der Dichtungskammer 10 bzw. der Rückenfläche 15 des Dichtelements 11 einen Raum benötigen, der größer ist als der endgültig verbleibende Querschnitt der Dichtungskammer 10. Die Rundschnurringe 13, 14 und das Dichtelement 11 werden vor dem Einbringen des Aufnahmeringes 6 in die Sackbohrung des Anschlußringes 3 eingebracht und liegen dann diagonal derartig lose aneinander, daß der an der Rückenfläche 15 des Dichtelements 11 anliegende Rundschnurring 13, also der Rundschnurring 13 mit dem geringeren Durchmesser, kolbenstangenaustrittsseitig angeordnet ist, im Ausführungsbeispiel also am Boden 9 der Sackbohrung im Abschlußring 3 liegt. Mit dem Einbringen des Aufnahmerings 6 in die Sackbohrung des Abschlußrings 3 und der Positionierung in seine endgültige Tiefenposition werden die Rundschnurringe 13, 14 gegeneinander und gegen die übrige Anlagefläche verspannt, was zu einer Verformung ihres Querschnitts, wie in Fig. 2 gezeigt, führt. Diese Verspannung und Verformung der Rundschnurringe 13, 14 führt dazu, daß der Rundschnurring 13 eine radiale Kraft auf das Dichtelement 11 ausübt.

Die Verspannung der Rundschnurringe 13, 14 und die dadurch erzielte radiale Andrückung des Dichtelements 11 wird hydraulisch unterstützt. Der Hydraulikdruck im Zylinder 2 des Stoßdämpfers überträgt sich durch den Führungsspalt zwischen Gleitbuchse 7 und Kolbenstange 1 bis in die verbleibende Restkammer 16 der Dichtungskammer 10. Durch die Druckbeaufschlagung auf den Rücken des Rundschnurringes 14 wird hier eine Keilwirkung erzielt und führt zu einer erhöhten Pressung zwischen den Rundschnurringen 13, 14. Dieser Anpreßdruck wird noch durch die Druckerhöhung infolge der Pumpwirkung zwischen Kolbenstange 1 und Gleitbuchse 7 erhöht, so daß auch diesbezüglich eine Erhöhung der Dichtkraft in erwünschter Weise erzielt wird. Der vorbeschriebene Effekt hat besonders beim Einsatz der Dichtung in Kälte, beispielsweise bei minus 40° Celsius, besonders positive Auswirkungen. Bei hohen Minus-Temperaturen nimmt die innere Elastizität der Rundschnurringe 13, 14 rapide ab, d.h. sie werden nur langsam ihre ursprüngliche kreisförmige Querschnittsform annehmen. Da sie jedoch im verspannten Zustand die gezeigte Keilform aufweisen, kann trotzdem durch den vorbeschriebenen Effekt eine gute Andrückung des Dichtelements 11 gegen die Kolbenstange 1 erzielt werden. Das gilt auch für den Fall, daß die Rundschnurringe 13, 14 aufgrund von Alterung einen Teil ihrer Elastizität einbüßen.

Durch die Ausbildung der Rundschnurringe 13, 14 aus gleichem Material, aber mit unterschiedlichen mechanischen Eigenschaften, wie Härte, Elastizität oder Kältefestigkeit, oder auch aus unterschiedlichem Material, kann eine große Variabilität der Dichtung insgesamt bezüglich geforderter Eigenschaften erzielt werden.

### Bezugszeichenliste

- 1.: Kolbenstange
- 2.: Zylinder
- 3.: Abschlußring
- 4.: Sprengring
- 5.: Dichtung
- 6.: Aufnahmering
- 7.: Gleitbuchse
- 8.: Ringfläche
- 9.: Boden
- 10.: Dichtungskammer
- 11.: Dichtelement
- 12.: Dichtkante
- 13.: Rundschnurring
- 14.: Rundschnurring
- 15.: Rückenfläche
- 16.: Kammer

## Patentansprüche

1. Vorrichtung zum Abdichten eines mit einem Hydraulikmedium gefüllten, zu einem Behälter abgeschlossenen Zylinders (2) vorzugsweise eines hydraulischen Stoßdämpfers, gegenüber einer hierein durch ein offenes Ende des Zylinders (2) ein- oder ausfahrenden Kolbenstange (1), eine Dichtungsvorrichtung aufweisend, die mit einem, vorzugsweise aus elastischem Kunststoff bestehenden Dichtelement (11), das mit einer an der Kolbenstange (1 ) anliegenden Dichtkante (12) ausgebildet ist, das über einen Elastomerkörper verspannt wird und mit letzterem in einer Dichtungskammer (10) angeordnet ist, **dadurch gekennzeichnet, daß** die Verspannung des Dichtelements (11) über zwei im Querschnitt der Dichtungskammer (10) diagonal aneinanderliegender Rundschnurringe (13, 14) erfolgt, die unverspannt aneinander und an den Anlageflächen der Dichtungskammer (10) bzw. der Rückenfläche (15) des Dichtelements (11) liegend, einen Raum benötigen, der größer ist als der verbleibende Querschnitt der Dichtungskammer (10).

2. Vorrichtung nach Anspruch 1, **dadurch gekennzeichnet, daß** wenigstens einer der Rundschnurringe (13, 14) einen kreisförmigen Querschnitt aufweist.

3. Vorrichtung nach Anspruch 1 oder Anspruch 2, **dadurch gekennzeichnet, daß** der an der Rückenfläche (15) des Dichtelements (11) anliegende Rundschnurring (13) kolbenstangenaustrittsseitig in der Dichtungskammer (10) liegt.

4. Vorrichtung nach einem oder mehreren der Ansprüche 1 bis 3, **dadurch gekennzeichnet, daß** die Rundschnurringe (13, 14) unterschiedliche mechanische Eigenschaften, wie Härte, Elastizität oder Kältefestigkeit, aufweisen.

5. Vorrichtung nach einem oder mehreren der Ansprüche 1 bis 4, **dadurch gekennzeichnet, daß** die Rundschnurringe (13, 14) aus unterschiedlichem Material bestehen.

## Claims

1. Device for sealing a cylinder (2), which is filled with a hydraulic medium and ends at a container, preferably of a hydraulic shock absorber with respect to a piston rod (1) which enters therein or exits therefrom through an open end of the cylinder (2), the device comprising a sealing device which [*lacuna*] with a sealing element (11) which preferably consists of resilient synthetic material and is formed with a sealing edge (12) lying against the piston rod (1), which sealing element is clamped by an elastomeric body and is disposed therewith in a sealing chamber (10), **characterised in that** the sealing element (11) is clamped via two toroidal sealing rings (13, 14) which lie against each other diagonally in the cross-section of the sealing chamber (10) and lie against each other in an unclamped manner and lie against the bearing surfaces of the sealing chamber (10) or the back surface (15) of the sealing element (11), taking up a larger space than the remaining cross-section of the sealing chamber (10).

2. Device as claimed in Claim 1, **characterised in that** at least one of the toroidal sealing rings (13, 14) has a circular cross-section.

3. Device as claimed in Claim 1 or Claim 2, **characterised in that** the toroidal sealing ring (13) lying against the back surface (15) of the sealing element (11) lies in the sealing chamber (10) on the side where the piston rod exits.

4. Device as claimed in one or several of Claims 1 to 3, **characterised in that** the toroidal sealing rings (13, 14) have different mechanical properties, such as hardness, elasticity or resistance to cold.

5. Device as claimed in one or several of Claims 1 to 4, **characterised in that** the toroidal sealing rings (13, 14) consist of a different material.

## Revendications

1. Dispositif pour assurer l'étanchéité d'un cylindre (2) rempli d'un fluide hydraulique et relié à un réservoir, de préférence le cylindre d'un amortisseur hydraulique, vis-à-vis d'une tige de piston (1) qui en sort et y pénètre par une extrémité ouverte du cylindre (2), qui présente un dispositif d'étanchéité réalisé de préférence en matière synthétique élastique configuré avec un élément d'étanchéité (11) qui est doté d'une lèvre d'étanchéité (12) appliquée contre la tige de piston (1), qui est soutenu par un corps en élastomère, et qui est disposé avec ce dernier dans une chambre d'étanchéité (10), **caractérisé en ce que** le soutien de l'élément d'étanchéité (11) est obtenu par l'intermédiaire de deux bagues toroïdales (13, 14) disposées diagonalement l'une contre l'autre dans la section transversale de la chambre d'étanchéité (10) et qui, pour reposer sans contrainte l'une contre l'autre et contre les surfaces d'appui de la chambre d'étanchéité (10) et de la surface arrière (15) de l'élément d'étanchéité (11), nécessitent un espace plus grand que la section transversale restante de la chambre d'étanchéité (10).

2. Dispositif selon la revendication 1, **caractérisé en ce qu'**au moins l'une des bagues toroïdales (13, 14) a une section transversale circulaire.

3. Dispositif selon la revendication 1 ou la revendication 2, **caractérisé en ce que** la bague toroïdale (13) appliquée contre la surface arrière (15) de l'élément d'étanchéité (11) est située dans la chambre d'étanchéité (11) du côté de la sortie de la tige de piston.

4. Dispositif selon l'une ou plusieurs des revendications 1 à 3, **caractérisé en ce que** les bagues toroïdales (13, 14) ont des propriétés mécaniques différentes, par exemple leur dureté, leur élasticité ou leur résistance au froid.

5. Dispositif selon l'une ou plusieurs des revendications 1 à 4, **caractérisé en ce que** les bagues toroïdales (13, 14) sont constituées de matériaux différents.
